# EUROPEAN PATENT APPLICATION

(11) **EP 2 146 526 A1**
(43) Date of publication of application: **20.01.2010**
(21) Application number: 09162166.4
(22) Date of filing: 08.06.2009
(51) Int. Cl.: H04W 4/02, H04W 8/18, H04L 29/08, G06F 17/30, G06Q 30/00

(54) **Apparatus and method for providing regional information in mobile communication system**

(30) Priority: 14.07.2008 KR 20080068105
(71) Applicant: Samsung Electronics Co., Ltd., Suwon-si, Gyeonggi-do (KR)
(72) Inventor: Kim, Sung-In, Incheon (KR)
(74) Representative: Harrison Goddard Foote

(57) **Abstract**

An apparatus and method for providing regional information in a mobile communication system are provided. More particularly, an apparatus and method for providing regional information stored in an identification card (514) by using a Subscriber Identification Module (SIM) application toolkit are provided. The apparatus includes a regional information provider terminal comprises a Global Positioning System (GPS) processor for acquiring (524) location information of the portable terminal when the regional information is confirmed and a controller for inserting the acquired location information to the regional information request message, for transmitting the message (528) to the regional information server (505) by using a SIM application toolkit, and, if a response for the message (540) is received from the regional information server, for displaying (542) the response, and if the regional information is included in the response, for outputting the regional information.

## Description

### BACKGROUND OF THE INVENTION

### 1. Field of the Invention

The present invention relates to an apparatus and method for providing regional information in a mobile communication system. More particularly, the present invention relates to an apparatus and method for providing regional information stored in an identification card by using a Subscriber Identification Module (SIM) application toolkit.

### 2. Description of the Related Art

Portable terminals have become necessities of modern life for people of all ages. Service providers and terminal manufacturers competitively develop differentiated products and services for differentiation from other enterprises.

For example, the portable terminal has developed into a multimedia device capable of providing various services such as phonebooks, games, short messages, e-mails, wake-up calls, Motion Picture Experts Group(MPEG)-1 Audio Layer 3 (MP3) players, digital cameras, and wireless Internet services.

The wireless Internet service is one of services used by many users since the users can conveniently use their portable terminals to easily access to the Internet in a situation where personal computers cannot be used.

For example, when a portable terminal user intends to determine information on restaurants in a specific region while travelling, the user can search for the information on the restaurants in the specific region by using a wireless Internet function.

However, the wireless Internet function has a problem in that the user has to directly input information on a region and details thereof in a passive manner, that is, the user has to directly search for specific information on the region (e.g., information on good food restaurants, information on movies now showing, etc.).

### SUMMARY OF THE INVENTION

An aspect of the present invention is to address at least the above-mentioned problems and/or disadvantages and to provide at least the advantages described below. Accordingly, an aspect of the present invention provides an apparatus and a method for providing regional information in a mobile communication system.

Another aspect of the present invention provides an apparatus and method for providing regional information stored in an identification card.

Still another aspect of the present invention is to provide an apparatus and method for acquiring regional information by using a Subscriber Identification Module (SIM) application toolkit to provide the regional information in a mobile communication system.

In accordance with an aspect of the present invention, a mobile communication system for providing regional information is provided. The mobile communication system includes a regional information requestor terminal for transmitting the regional information to a regional information server by inserting location information to the regional information and thereafter for outputting a response containing the regional information by receiving the response from the regional information server, the regional information server for transmitting a message that requests the regional information to a user registered to provide regional information on a specific region upon receiving the regional information request message, and for providing the regional information to a portable terminal that requests the regional information by receiving the regional information from the user registered to provide the regional information, and a regional information provider terminal for generating a message containing information on the specific region and for providing the generated message to a the regional information server upon receiving a regional information request from the regional information server.

In accordance with another aspect of the present invention, a method for providing regional information in a mobile communication system is provided. The method includes requesting regional information of a portable terminal for transmitting the regional information to a regional information server by inserting location information to the regional information, and thereafter for outputting a response containing the regional information by receiving the response from the regional information server, providing regional information of the regional information server for transmitting a message that requests the regional information to a user registered to provide regional information on a specific region upon receiving the regional information request message, and for providing the regional information to a portable terminal that requests the regional information by receiving the regional information from the user registered to provide the regional information, and providing the regional information of the portable terminal for generating a message containing information on the specific region and for providing the generated message to a the regional information server upon receiving a regional information request from the regional information server.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 is a block diagram illustrating a structure of a portable terminal that provides a regional information service according to an exemplary embodiment of the present invention;
FIG. 2 is a flow diagram illustrating a process of requesting regional information in a portable terminal according to an exemplary embodiment of the present invention;
FIG. 3 is a flow diagram illustrating a process of providing regional information in a regional information server according to an exemplary embodiment of the present invention;
FIG. 4 is a flow diagram illustrating a process of providing regional information in a portable terminal that receives a request for regional information according an exemplary embodiment of the present invention; and
FIG. 5 is a ladder diagram illustrating a process for providing regional information in a mobile communication system according to an exemplary embodiment of the present invention.

Throughout the drawings, like reference numerals will be understood to refer to like parts, components and structures.

### DETAILED DESCRIPTION OF EMBODIMENTS OF THE INVENTION

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Exemplary embodiments of the present invention include an apparatus and method for collecting information on a specific region (e.g., information on restaurants, information on cinemas, etc.) by using a Subscriber Identification Module (SIM) card in a portable terminal. In the present invention, not only a normal SIM but also a Universal SIM (USIM) is included in the concept of the SIM card. In the following description, regional information is information on a specific business (e.g., information on restaurants, information on cinemas, information on transportation terminals, information on hotels, etc.) in a region where the portable terminal is located, and is real-time information that can be determined ed on a real-time basis.

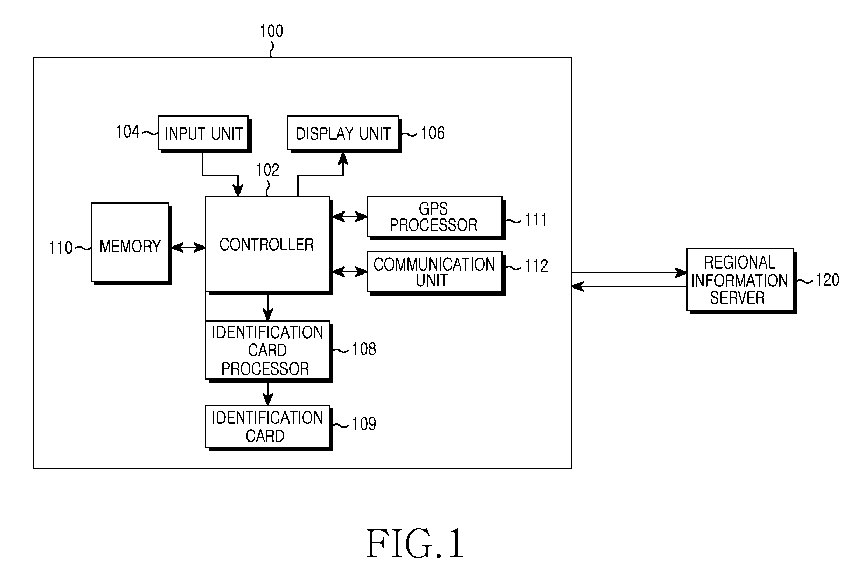

FIG. 1 is a block diagram illustrating a structure of a portable terminal that provides a regional information service according to an exemplary embodiment of the present invention. A portable terminal 100 can communicate with a regional information server 120 to receive the regional information.

Referring to FIG. 1, the portable terminal 100 includes a controller 102, an input unit 104, a display unit 106, an identification card processor 108, an identification card 109, a memory 110, a Global Positioning System (GPS) processor 111, and a communication unit 112.

The controller 102 of the portable terminal 100 controls overall control to the portable terminal 100. For example, the controller 102 performs controls and processes voice and data communications. According to an exemplary embodiment of the present invention, the controller 102 may be a controller of a portable terminal that requests regional information or a controller of a portable terminal that provides the regional information. The operation of the controller 102 will be described in detail by considering the use of the two types of portable terminals.

In a first case where the controller 102 is a controller of the portable terminal 100 that requests the regional information, the controller 102 acquires the regional information of the portable terminal 100 upon detecting a regional information request. The controller 102 generates a regional information request message including the acquired location information and transmits the generated regional information request message to the regional information server 120.

Thereafter, upon receiving the regional information from the regional information server 120, the controller 102 controls the display unit 106 to display the received regional information.

In a second case where the controller 102 is a controller of the portable terminal 100 that provides the regional information, the controller 102 operates as follows. It is assumed herein that information on a specific region is input by a user and is pre-stored in the portable terminal 100.

When a regional information request message is received from the regional information server 120, under the control of the controller 102 of the portable terminal 100 that provides the regional information, it is determined whether the regional information request message can be responded to. It may be determined that the regional information request message can be responded to if a location directly input by the user of the portable terminal 100 to provide the regional information is identical to a regional location included in the regional information request message. In this case, the portable terminal 100 can pre-store the regional information responsive to the regional information request message in the identification card 109.

If the portable terminal 100 does not store the regional information responsive to the regional information request message in the identification card 109, location information on the regional information responsive to the regional information request message can be transmitted to the regional information server 120 under the control of the controller 102 so as to respond to the regional information request message for a specific region.

If it is determined that the regional information request message can be responded to, the pre-stored regional information is acquired from the identification card 109 and is provided to the regional information server 120 under the control of the controller 102. In this case, the controller 102 controls the identification card processor 108 to acquire the regional information stored in the identification card 109.

The input unit 104 includes a plurality of function keys such as numeral key buttons of '0' to '9', a menu button, a cancel (or delete) button, an OK button, a talk button, an end button, an Internet access button, a navigation (or direction ) key button, and a character input key. Key input data (e.g., a request to access a regional information menu), which is input when the user presses these keys, is provided to the controller 102.

The display unit 106 displays information such as state information, which is generated while the portable terminal 100 operates, limited numeral characters, large-sized moving and still pictures, and the like. The display unit 106 may be a color Liquid Crystal Display (LCD). If the LCD is provided as a touch screen, the display unit 106 may perform a part or all of the functions of the input unit 104.In an exemplary implementation, the display unit 106 displays a variety of information (e.g., text files, still picture files, moving picture files) from the regional information server.

The identification card processor 108 is a module for managing and processing a variety of information recorded in the identification card 109. When the portable terminal is powered on, the identification card processor 108 communicates with the identification card 109 to provide a menu for displaying customized services by using the identification card or to acquire the pre-stored regional information to be provided to the controller 102.

The identification card 109 may be attachable to and detachable from the portable terminal 100, and has a micro processor and a memory chip embedded therein. Further, the identification card 109 may include a SIM card as a medium (e.g., a smart card and the like) for storing a variety of user information. According to an exemplary embodiment of the present invention, the identification card 109 includes the regional information.

The identification card 109 performs data communication with the portable terminal by using a SIM Application Toolkit (SAT). The SAT is a series of commands or procedures in which a network operator provides a unique service of the network operator to a portable terminal user. In an exemplary implementation, the SAT is used in data communication between the portable terminal and the identification card.

The memory 110 includes a Read Only Memory (ROM), a Random Access Memory (RAM), a flash ROM and the like. The ROM stores a microcode of a program for processing and control of the controller 102 and various reference data.

The RAM may be a working memory of the controller 102 and stores temporary data that is generated while programs are performed. The flash ROM stores rewritable data, such as a phonebook, an outgoing messages, an incoming messages and the like.

The GPS processor 111 includes a GPS receiver to receive a radio wave transmitted from a satellite, and measures current location information of the portable terminal by using the received radio wave.

The communication unit 112 transmits and receives a Radio Frequency (RF) signal of data that is input and output through an antenna (not illustrated). For example, in a transmitting process, data to be transmitted is subject to a channel-coding process and a spreading process, and then the data is transformed to an RF signal. In a receiving process, the RF signal is received and transformed to a base-band signal, and the base-band signal is subject to a de-spreading process and a channel-decoding process, thereby restoring the data.

When the regional information request message including the location information of the portable terminal 100 is received from the portable terminal 100, the regional information server 120 allows the message to be transmitted to a portable terminal of a user responsive to that request.

An exemplary apparatus for providing regional information by using an SAT in a mobile communication system has been described above. Hereinafter, an exemplary method of providing the regional information by using this apparatus will be described.

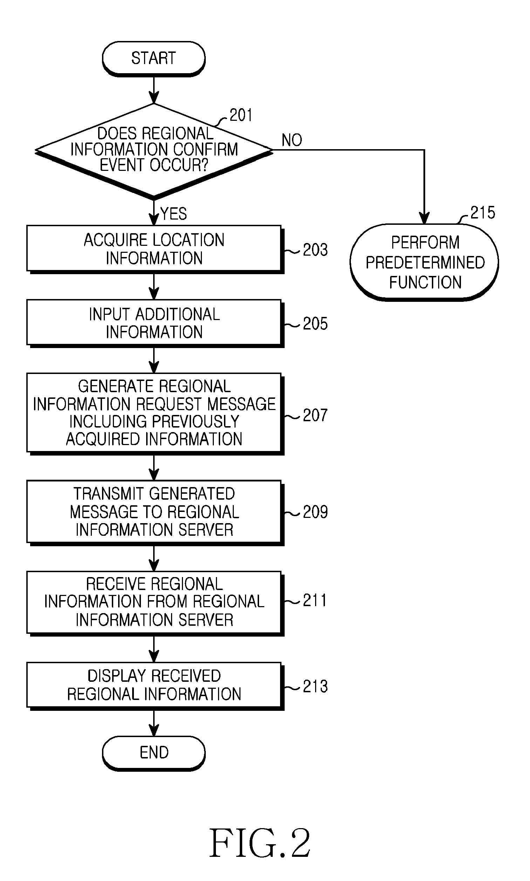

FIG. 2 is a flow diagram illustrating a process of requesting regional information in a portable terminal according to an exemplary embodiment of the present invention.

Referring to FIG. 2, the controller 102 of the portable terminal determines whether a regional information confirm event occurs in step 201. The regional information is information on a specific region (e.g., information on restaurants, cinemas, etc., around a downtown subway station). When it is determined that the event does not occur in step 201, proceeding to step 215, the controller 102 performs a predetermined function (e.g., a standby mode).

When it is determined that the event occurs in step 201, the controller 102 acquires the location information of the portable terminal 100 in step 203. Thereafter, the controller 102 inputs additional information in step 205. The controller 102 can acquire the location information of the portable terminal 100 by using location information provided from the GPS processor 111. The additional information may be a detailed item (e.g., restaurant information on a specific region) for requesting the regional information.

In step 207, the controller 102 generates a regional information request message including the information acquired in step 203 and step 205. In step 209, the controller 102 performs the regional information request process by allowing the generated message to be provided to the regional information server 120.

In step 211, the controller 102 receives the regional information from the regional information server 120. In step 213, the controller 102 controls the display unit 106 to display the received regional information. The regional information transmitted by the regional information server 120 is regional information provided from the portable terminal that provides information on the specific region.

After that, the controller 102 ends the operation.

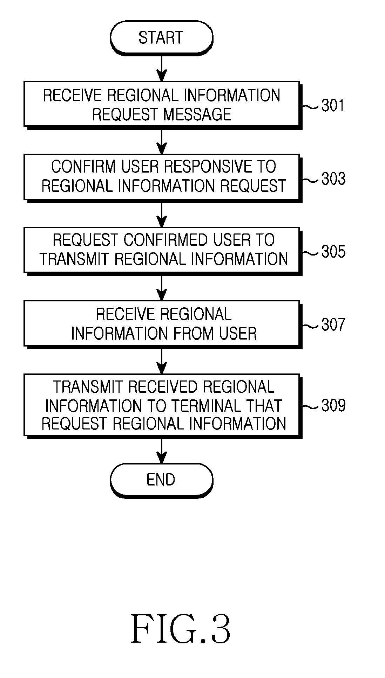

FIG. 3 is a flow diagram illustrating a process of providing regional information in a regional information server according to an exemplary embodiment of the present invention.

Referring to FIG. 3, the regional information server 120 receives a regional information request message in step 301, and then confirms a user responsive to a regional information request in step 303. The regional information server 120 can perform step 303 by confirming a user registered to provide regional information which indicates a location of a portable terminal and which is included in the regional information request message. The regional information server 120 can request the regional information only to a user to whom a response for a specific region is allowed.

In step 305, the regional information server 120 transmits a message for requesting the regional information to the confirmed user. In step 307, the regional information server 120 receives the regional information from the user.

The regional information server 120 collects the received regional information and then transmits the regional information to the portable terminal that requests the regional information in step 309. After that, the regional information server 120 ends the operation.

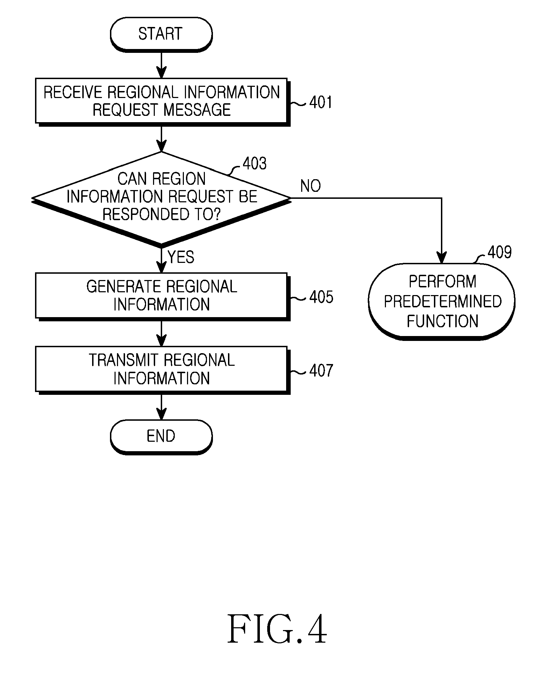

FIG. 4 is a flow diagram illustrating a process of providing regional information in a portable terminal that receives a request for regional information according an exemplary embodiment of the present invention.

Referring to FIG. 4, the portable terminal receives a regional information request message from the regional information server 120 in step 401. Thereafter, the portable terminal determines whether a regional information request can be responded to in step 403. The process of determining whether the regional information request can be responded to may be performed by confirming whether regional information is pre-stored, wherein the regional information corresponds to a region for which the regional information is requested.

When it is determined that the regional information request cannot be responded to, proceeding to step 409, the portable terminal performs a predetermined function (e.g., a standby mode).

When it is determined that the regional information request can be responded to, the portable terminal generates a message including the regional information in step 405, and transmits the generated regional information to the regional information server 120 in step 407.

Thereafter, the procedure of FIG. 4 ends.

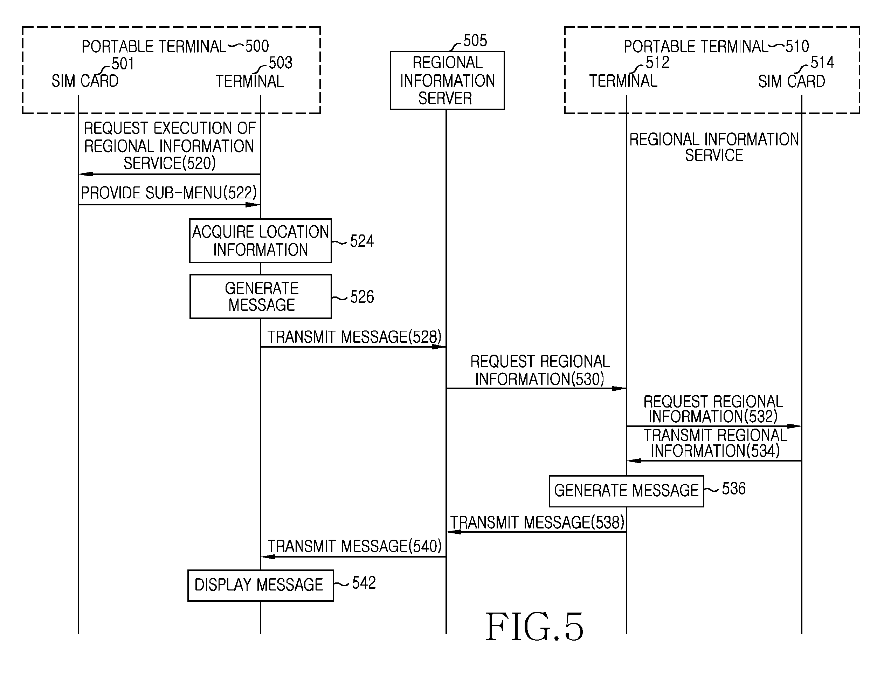

FIG. 5 is a ladder diagram illustrating a process of providing regional information in a mobile communication system according to an exemplary embodiment of the present invention.

Referring to FIG. 5, the mobile communication system includes a portable terminal 500 that requests regional information, a regional information server 505, and a portable terminal 510 that provides the regional information.

The portable terminal 500 that requests the regional information includes a SIM card 501 and can be divided into a terminal 503 and the SIM card 501.

If a user accesses an information service menu, the terminal 503 requests the SIM card 501 to execute the regional information service in step 520.

In this case, the terminal 503 may transmit to the SIM card 501 an envelope command provided from a SAT and thus can report the access to the regional information service menu.

The envelope command is a command transmitted from the terminal 503 to the SIM card 501.

Upon receiving the envelope command for requesting execution of the regional information service, the SIM card 501 transmits sub-menu information (e.g., restaurant information, cinema information, hotel information, etc.) to the terminal 503 in step 522. For example, the SIM card 501 can transmit a list of "1: restaurant, 2: hotel, 3: cinema, 4: transportation terminal".

The SIM card 501 can use a select item proactive command provided from the SAT to transmit the sub-menu information to the terminal 503. The select item proactive command is a command transmitted from the SIM card 501 to the terminal 503.

Thereafter, upon receiving the sub-menu information, the terminal 503 acquires location information of the portable terminal by the GPS processor in step 524. In step 526, the terminal 503 generates a message including the location information of the portable terminal and the sub-menu information of step 522. For example, if a portable terminal user is located in a downtown area and requests restaurant information, the message includes a sub-menu for requesting the restaurant information and coordinates of the downtown area, i.e., a current location of the portable terminal.

The portable terminal 500 performs the regional information request process in step 528 by transmitting the generated message to the regional information server 505. In this step, the portable terminal can transmit the regional information request message by using a send short message function of the SAT.

Upon receiving the regional information request, the regional information server 505 transmits the received regional information service to the portable terminal 510 that provides the regional information in step 530.

The regional information server 505 can provide the regional information request message to unspecified users or can request the portable terminal registered in the regional information server (i.e., the portable terminal registered to provide regional information only for a specific region) to transmit the regional information.

The portable terminal 510 that receives the regional information request from the regional information server 505, that is, the portable terminal 510 that provides the regional information, includes a SIM card 514 and can be divided into a terminal 512 and the SIM card 514, similarly to the portable terminal 500 that requests the regional information.

If the portable terminal 510 that provides the regional information receives a request of the regional information, the regional information (e.g., today's special, today's recommendation, or cozy seats) is requested to the SIM card 514 in step 532. Upon receiving the request, the SIM card 514 transmits information on a region corresponding to the regional information request to the terminal 512 in step 534.

The terminal 512 generates a message including the regional information in step 536, and provides the generated message to the regional information server 505 in step 538.

Upon receiving the message including the regional information, the regional information server 505 transmits the received message to the portable terminal 500 that requests the regional information in step 540.

The portable terminal 500 controls the display unit to display the received regional information in step 542.

According to exemplary embodiments of the present invention, an apparatus and method for providing regional information stored in an identification card by using a SIM application toolkit in a portable terminal are provided. Therefore, regional information on a specific region can be received from unspecified terminals in the region, and thus there is no need to search the Internet inconveniently to find information on the region. In addition, information on the region can be acquired on a real-time basis.

While the present invention has been shown and described with reference to certain exemplary embodiments thereof, it will be understood by those skilled in the art that various changes in form and details may be made therein without departing from the spirit and scope of the present invention as defined by the appended claims and their equivalents.

## Claims

1. A mobile communication system for providing regional information, the mobile communication system comprising:
a regional information requestor terminal(500) for transmitting the regional information to a regional information server(505) by inserting location information to the regional information and thereafter for outputting a response containing the regional information by receiving the response from the regional information server(505);
the regional information server(505) for transmitting a message that requests the regional information to a user registered to provide regional information on a specific region upon receiving the regional information request message, and for providing the regional information to a portable terminal that requests the regional information(500) by receiving the regional information from the user registered to provide the regional information; and
a regional information provider terminal(510) for generating a message containing information on the specific region and for providing the generated message to the regional information server(505) upon receiving a regional information request from the regional information server.

2. The mobile communication system of claim 1, wherein the regional information provider terminal(500) comprises a Global Positioning System (GPS) processor(111) for acquiring location information of the portable terminal when the regional information is confirmed and a controller(102) for inserting the acquired location information to the regional information request message, for transmitting the message to the regional information server(505) by using a Subscriber Identification Module (SIM) application toolkit, and, if a response for the message is received from the regional information server(505), for outputting the regional information.

3. The mobile communication system of claim 1, wherein the regional information provider terminal(510) comprises an identification card processor(108) for acquiring regional information by using a SIM application toolkit and a controller(102) for receiving the regional information request message, and for generating a message containing regional information acquired by the identification card processor(108) to transmit the generated message to the regional information server.

4. The mobile communication system of claim 3, wherein the identification card processor determines whether regional information request can be responded to by determining whether regional information corresponding to a portable terminal location included in the regional information request message is pre-stored.

5. The mobile communication system of claim 3, wherein the identification card processor(108) determines whether the regional information can be responded to by using the SIM application toolkit.

6. The mobile communication system of claim 3, wherein the controller(102) determines a specific region that can provide a response and transmits the determination result to the regional information server(505), and thereafter the controller provides control to receive the regional information request for the determined specific region from the regional information server(505).

7. The mobile communication system of claim 1, wherein the controller(102) transmits the regional information request message by using a Get Inkey function of the SIM application toolkit.

8. A method for providing regional information in a mobile communication system, the method comprising:
requesting regional information of a portable terminal for transmitting(528) the regional information to a regional information server by inserting location information to the regional information, and thereafter for outputting(542) a response containing the regional information by receiving the response from the regional information server;
providing regional information of the regional information server for transmitting(530) a message that requests the regional information to a user registered to provide regional information on a specific region upon receiving the regional information request message, and for providing(540) the regional information to a portable terminal that requests the regional information by receiving the regional information from the user registered to provide the regional information; and
providing the regional information of the portable terminal for generating(536) a message containing information on the specific region and for providing(538) the generated message to a the regional information server(505) upon receiving a regional information request from the regional information server(505).

9. The method of claim 8, wherein the requesting of the regional information of the portable terminal comprises acquiring(524) location information of the portable terminal when the regional information is confirmed, inserting the acquired location information to the regional information request message and transmitting(528) the message to the regional information server(505), and, if a response for the message is received from the regional information server(505), outputting(542) the regional information.

10. The method of claim 8, wherein the providing of the regional information of the portable terminal comprises, if the regional information request is received, acquiring regional information by using a Subscriber Identification Module (SIM) application toolkit, and generating(536) a message containing the acquired regional information to transmit(538) the generated message to the regional information server(505).

11. The method of claim 10, wherein the determining of whether the regional information request can be responded to is performed by determining whether regional information corresponding to a portable terminal location included in the regional information request message is pre-stored.

12. The method of claim 11, wherein the determining of whether the regional information request can be responded to is performed by using the SIM application toolkit.

13. The method of claim 10, wherein the providing of the regional information of the portable terminal further comprises determining a specific region that can provide a response and transmits the determination result to the regional information server(505), and receiving a regional information request for the determined specific region from the regional information server.

14. The method of claim 8, wherein, in the requesting of the regional information of the portable terminal, the regional information request message is transmitted by using a Get Inkey function of the SIM application toolkit.
